# EUROPEAN PATENT APPLICATION

(11) **EP 2 789 275 A1**
(43) Date of publication of application: **15.10.2014**
(21) Application number: 13162868.7
(22) Date of filing: 09.04.2013
(51) Int. Cl.: A47J 31/38, A47J 31/54

(54) **Coffee machine**

(71) Applicant: Aroma Polti SA, 6900 Lugano (CH)
(72) Inventor: Polti, Stefano, 6925 Gentilino (CH)
(74) Representative: Zardi, Marco

(57) **Abstract**

A coffee machine (1) is disclosed, the machine comprising a water storage tank (2), water heating means (4) and a capsule holder (5) suitable for receiving a pod or capsule from which coffee is extracted using the water heated inside the chamber. The heating means are of the electromagnetic induction type. A method for extracting the coffee in a pod or capsule machine by means of the water heated using the electromagnetic induction heating means is also disclosed.

## Description

### Field of application

The present invention relates to a coffee machine and in particular to a coffee machine of the capsule or pod type. The invention also relates to a method for preparing coffee by means of a capsule or pod machine.

### Prior Art

As is known, a capsule or pod coffee machine extracts the coffee from a capsule or a pod which contains compressed coffee powder.

Essentially, the machine is equipped with a water storage tank, a pump and heating means, for example a heat exchanger, a boiler or an electric resistance, which heat the water to a temperature suitable for extraction of the coffee, for example 90°C. When the water reaches the required temperature, the heating means are automatically deactivated and the user may perform dispensing of the coffee by means of a pushbutton which discharges a given amount of hot water into the capsule or pod. The hot water penetrates into the capsule or pod, inside a capsule holder or pod holder of the machine, and extracts the liquid coffee.

These machines are popular because they are extremely practical.

In fact, the coffee is already dosed and compressed inside the pod or the capsule and therefore avoids the user having to add the coffee powder manually, speeding up considerably preparation. Moreover, emptying of the machine is also simplified since it is merely required to remove the capsule and the user does not have to clean and wash the machine after the coffee has been dispensed.

The known machine is also versatile because it allows coffee to be prepared in different concentrations, for example espresso coffee, long coffee or American coffee, essentially by varying the amount of hot water to be dispensed through the capsule by means of a preset program. The various taste preferences of users are also satisfied by using pods or capsules which have different aromas or concentrations.

Despite the various advantages listed above, the known capsule machine has a number of drawbacks, mainly associated with the water heating method.

A first drawback is due to what is known as the "machine heating time", i.e. the time required for the heating means to heat the water inside the storage tank to the required temperature, with consequent need for the user to wait. Dispensing therefore cannot be performed immediately and the user must wait for several minutes before drinking the coffee.

It also happens that certain users may perform dispensing of the coffee in advance, when the water is not yet at the required temperature, this adversely affecting the quality of the coffee, since the water is no longer able to perform correct extraction of the coffee from the powder inside the pod or the capsule.

Assuming that the user does not perform dispensing in advance, the heating means are deactivated when the water reaches the required temperature. In this case it may happen that the user does not perform dispensing of the coffee immediately and that the water in the boiler cools again, before dispensing, resulting again in the coffee not being properly extracted.

In order to overcome this drawback, it is known to detect constantly the temperature of the water inside the boiler and to activate again the heating means when the temperature falls below a predefined value, heating the water again to the required temperature; activation and deactivation are controlled by a circuit board connected to a temperature sensor.

However, between deactivation and subsequent reactivation of the heating means, the temperature of the water is subject to fluctuations which again affect the quality of the coffee dispensed.

On the other hand, in order to prevent these fluctuations, it is not efficient to keep the heating means always active or to set a standby time, for example of 10 minutes, before they are switched off; in fact, this solution results in an excessive amount of electric power being used, since the heating means use power in standby mode, and in any case does not guarantee correct extraction of the coffee; in fact, it is quite possible for the user to perform dispensing at the end of the standby time, i.e. when the means have already been deactivated and the temperature of the water has already dropped. Even though some coffee machines are programmed to prevent the dispensing of water before the predefined temperature is reached and therefore prevent incorrect extraction of the coffee with water which is too cold, they are unable to prevent long waiting times for the user.

The electric power consumption levels are high also because the heating means heat all the water present in the boiler/exchanger and, if the machine is left switched on for a long period of time, they are repeatedly activated so as to keep all the water at the required temperature.

Moreover, even if dispensing is performed as soon as the machine reaches the required temperature, namely assuming that the machine is used as suggested, it happens that the temperature of the water may in any case not be optimum for extraction of the coffee, owing to the dispersion of heat along the fluid path which conveys the water from the boiler to the capsule or the pod.

In an attempt to overcome this latter drawback, in the known machine it is envisaged raising the temperature of the water in the tank to a value T2 higher than the temperature T1 required during dispensing, for example T2=98°C instead of T1=90°C, thus compensating for loss of heat along the fluid path.

However, it is not possible to predict exactly the loss of heat along the path, for example, owing to the ambient temperature which influences dispersion, and it is thus happens that the water reaches the pod and the capsule too hot or too cold, thus preventing again correct extraction thereof.

In this connection, also the considerable quantity of water present in the boiler, which as mentioned may be equal to one or more litres, causes sudden heat dispersion and rapid changes in temperature, which are moreover differently detected in different portions of the boiler.

In other words, it is very difficult to ensure that the temperature of the water is optimum for dispensing the coffee in the capsule or pod machine, both because the instant in which the user will perform dispensing, after switching on the machine, cannot be foreseen and because it is difficult to monitor and maintain with precision the water temperature inside the storage tank.

The technical problem forming the basis of the present invention is to devise a pod or capsule coffee machine which is able to heat rapidly the temperature of the water, thus reducing the waiting time for the coffee, but also raise the temperature of the water to an optimum value for extraction of the coffee from the pod or the capsule, in order to obtain a coffee which is of high quality or has a superior taste, substantially overcoming all the drawbacks which limit hitherto the known pod or capsule coffee machines.

### Summary of the invention

The proposed solution at the basis of the present invention is that of heating the water required to prepare a coffee in a pod machine using electromagnetic induction heating means, thus reducing the time needed to heat the water required to make the coffee, and also reducing the electric power needed to heat the water, since electromagnetic induction heating requires less power than heating in a boiler or a heat exchanger, and at the same time increasing the quality of the coffee and improving its taste since the temperature of the water heated with the electromagnetic induction heating means is controlled more easily and precisely compared to the temperature of the water heated with a boiler or a heat exchanger.

On the basis of such a proposed solution the technical problem is solved by a pod or capsule coffee machine comprising a water storage tank, water heating means and a pod or capsule holder able to receive a pod or capsule from which coffee is extracted using the heated water.

Advantageously, in such a coffee machine, the water is heated instantaneously and therefore dispensing of the coffee may be performed immediately. The power consumption is low, because the electromagnetic induction heating means use less power than a boiler or a heat exchanger, and the quality of the coffee is improved because the temperature of the water can be controlled more easily and precisely by means of the electromagnetic induction heating means, and therefore the temperature of the water may be kept at a preferred value, after the machine has been switched on, or may be heated instantaneously, as soon as the user performs dispensing of the coffee. Moreover, it is never required to keep the machine "on standby", i.e. keep the heating means active, while waiting for the user to perform dispensing of the coffee, since heating of the water is practically instantaneous. In particular, it is no longer required to use a boiler or a heat exchanger. For example, in order to make an espresso coffee, it is merely required to heat a few millilitres (e.g. 35 or 40 ml) of water, leaving all the water inside the tank at the ambient temperature.

A further advantage associated with the use of the induction means in the coffee machine consists in a significant reduction in the formation of limescale, which is the main reason for the maintenance operations carried out on coffee machines.

According to one feature of the present invention, the machine comprises a dosing chamber suitable for being filled with a given amount of water from the storage tank and the electromagnetic induction heating means are associated with the dosing chamber in order to heat the water inside the chamber.

An advantage of such a machine consists in the significant reduction of costs, it being no longer required to use a boiler or a heat exchanger with associated circuit board or a sensor for detecting the temperature of the water in the boiler in order to compensate for the loss of heat in the fluid flow from the storage tank to the pod or the capsule resulting from the huge quantity of water to be heated in the storage tank. The machine according to the invention is therefore significantly simplified. In fact, only the water inside the dosing chamber is heated, speeding up further the heating time and reducing the power consumption levels. In particular, the water inside the chamber is sufficient for preparing one coffee dose.

According to a feature of the present invention, the dosing chamber is situated downstream of or lower than the storage tank and receives the amount of water from the storage tank by means gravitational force. This arrangement of the chamber and the storage tank simplifies further the pod or capsule coffee machine and reduces further its costs since it does not require the use of a pump which propels the water from the storage tank to the pod or capsule. In one embodiment of the invention, the outflow of hot water from the dosing chamber may be adjusted by means of a simple electrically controlled valve.

Obviously, the machine may also be equipped with a pump for transferring the water from the storage tank to the dosing chamber and the storage tank may therefore be located in a position different from that of the chamber.

In one embodiment of the present invention, transfer of water from the storage tank to the dosing chamber terminates when the dosing chamber is full, namely when the amount of water to be heated corresponds to the capacity of the dosing chamber. In this case, the machine is further simplified because no means are envisaged for controlling the flow of water into the dosing chamber, since the flow simply terminates when the chamber is full of water.

According to another embodiment, the machine comprises control means for measuring the amount of water to be transferred from the storage tank to the dosing chamber, in order to extract coffee with a predefined concentration. In this embodiment it is possible to program different amounts of water to be transferred from the storage tank to the chamber - and therefore of water to be heated - in order to extract coffee in predefined concentrations. Basically all the water present in the dosing chamber is heated and dispensed towards the pod or the capsule. However, as already mentioned, the dosing chamber may receive predefined amounts or measures of water controlled by a circuit board of the machine.

In one embodiment, the electromagnetic induction means comprise an alternating current generator, a coil and an "inducer" inside the chamber or associated with the dosing chamber, for example wound around the chamber, which acts as a load. The generator supplies the alternating current which passes through the coil, generating an electromagnetic field which heats the inducer inside the chamber, being passed through by the eddy currents induced by the electromagnetic field. In this way, the water inside the dosing chamber may be heated by means of a precise, localized and controllable increase in the temperature of the chamber.

Preferably, the internal walls of the dosing chamber have a thin layer of ferromagnetic stainless steel (inducer) which rapidly heats and transfers the heat to the water, raising its temperature to a predefined value. For example in the case of espresso coffee, the temperature of the water may be raised to 90°C in less than 15 seconds or in less than 30 seconds in the case of a "long" coffee.

In another embodiment the inducer is situated in the centre of the dosing chamber, inside a central piston.

Advantageously, heating by means of electromagnetic induction allows the very small quantity of water inside the dosing chamber to be heated very rapidly, with minimum energy expenditure. The saving in energy is due not only to the small quantity of water to be heated, but also to the characteristics of the electromagnetic induction method, since a low voltage and low current intensity are sufficient to generate the electromagnetic field. In this connection, according to one feature of the invention, the coffee machine is equipped with a battery, for example a rechargeable battery. The pod or capsule coffee machine according to this feature of the invention is therefore portable.

Still according to the proposed solution illustrated above, the technical problem is solved by a method for preparing coffee in a coffee machine comprising a water storage tank, a water dosing chamber, electromagnetic induction means for heating the water and a capsule holder, the method comprising the steps of inserting a capsule in the capsule holder, activating the electromagnetic induction heating means, in order to heat the water, and extracting the coffee by dispensing the heated water through the pod or capsule.

Further advantages of the machine and the dispensing method according to the present invention will become clear from the description provided hereinbelow with reference to the accompanying drawings, provided solely by way of a non-limiting example.

### Brief description of the drawings

Figure 1 is a schematic side view of a pod or capsule coffee machine according to the present invention;

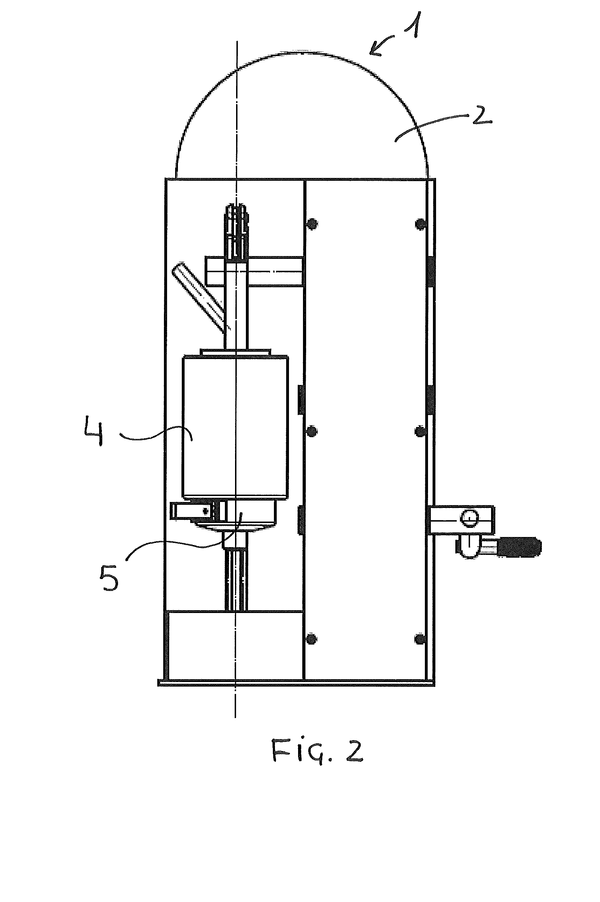

Figure 2 shows a schematic side view of the machine according to Figure 1;
Figures 3A and 3B are cross-sectional views of a dosing chamber of the machine according to Figure 1, during two different operating steps for preparation of the coffee;
Figures 3C and 3D are side views of the dosing chamber according to Figures 3A and 3B;
Figures 4A-4D are perspective views of a detail of the machine according to Figure 1;
Figures 5A and 5B are side views of a dosing chamber, during two different operating steps for preparation of the coffee, according to a variation of embodiment of the machine shown in Figure 1;
Figures 5C and 5D are cross-sectional views of the dosing chamber according to Figures 5A and 5B;
Figure 6 is a perspective and cross-sectional view of the machine according to figure 1.

### Detailed description

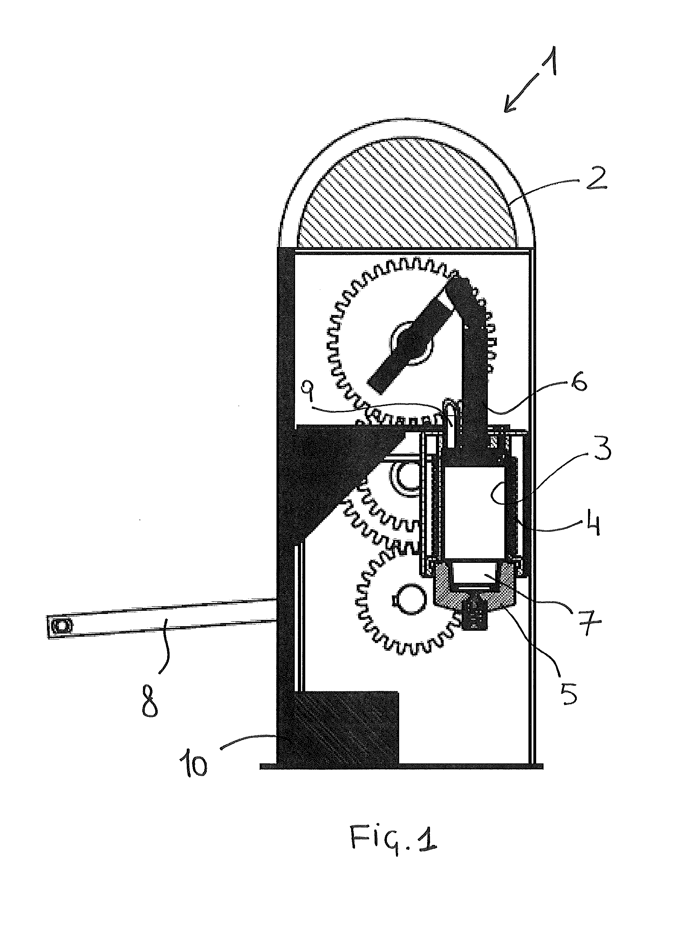

With reference to Figure 1, this schematically shows denoted by the reference number 1 a coffee machine of the pod or capsule type according to the present invention, comprising a storage tank 2, water heating means 4 and a pod holder or capsule holder 5.

In the remainder of the description the term "capsule" or "pod" is used indifferently to indicate a container for coffee in the form of compressed powder, of a predefined amount or with a predefined aroma, intended to be inserted into the pod or capsule holder 5 of the coffee machine, as a refill; a portion or dose of liquid coffee is extracted from the pod or capsule, by causing a corresponding amount of water heated to a predefined temperature, for example 90°C, to pass through it.

In Figure 1, 7 also denotes a pod or a capsule and 6 denotes a piston operating in the machine 1 so as to compress the heated water towards the pod or capsule 7. The piston can be operated for example manually by means of a lever 8, but obviously it is also possible for it to be operated electrically by means of a pushbutton on the machine 1 or for the water to be compressed through the pod or the capsule by means known per se and different from the piston 6.

According to the present invention, the water heating means are of the electromagnetic induction type.

Preferably, the machine 1 comprises a dosing chamber 3 suitable for receiving a predefined amount of water from the storage tank 2, for example by means of a duct 9, and the electromagnetic induction heating means are associated with the dosing chamber 3.

The dosing chamber 3 is situated downstream of the storage tank 2 and the flow of water from the storage tank 2 to the chamber 3 occurs by means of the gravitational force of the water, thus avoiding the use of a pump.

A circuit board 10 is connected to the heating means 4 and controls switching on and off thereof when the water inside the chamber 3 reaches the required temperature, avoiding overheating which could negatively affect the quality of the coffee. Advantageously it is not required to operate the heating means several times, in order to maintain the correct temperature of the water inside the dosing chamber, should it cool after being heated, this simplifying the programming and design of the circuit board 10. In fact, heating of the water inside the chamber 3 is practically instantaneous and may be performed at the time when dispensing of the coffee is requested. In other words, according to the present invention, even if the coffee machine 1 is switched on, i.e. electrically energized, it is not "heated", in the manner of the pod or capsule machine according to the prior art.

The electromagnetic induction heating means 4 comprise for example an alternating current generator and a coil 4 associated with dosing chamber, for example wound around the chamber 3. The coil 4 is designed to be passed through by the current of the generator and create an electromagnetic field which heats the walls of the chamber 3 which immediately transfer heat to the water inside the dosing chamber, instantaneously raising its temperature. The walls of the dosing chamber 3 are for example formed with a thin, ferromagnetic, metallic layer which heats immediately.

Still remaining within the scope of protection of the present invention, the electric induction heating means may be structurally associated with another component of the machine, for example the storage tank, and are in this case also designed to heat the water intended to enter into the pod or capsule, for extraction of the coffee.

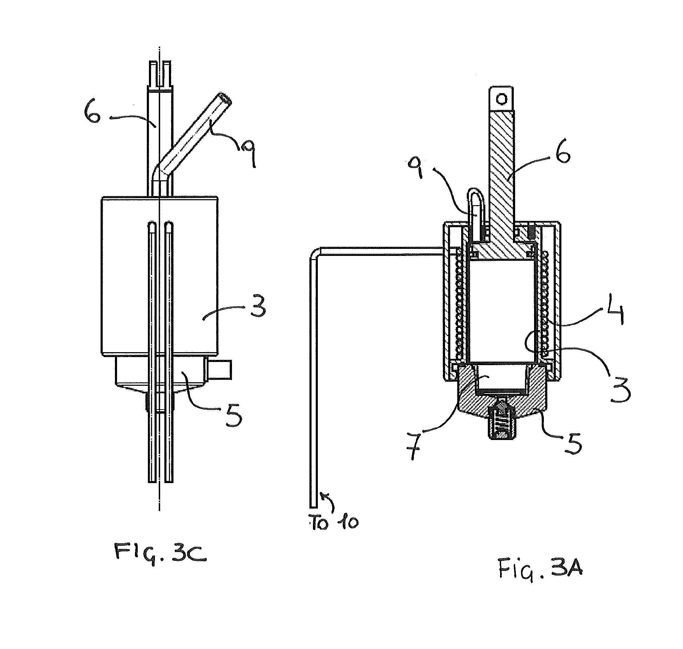

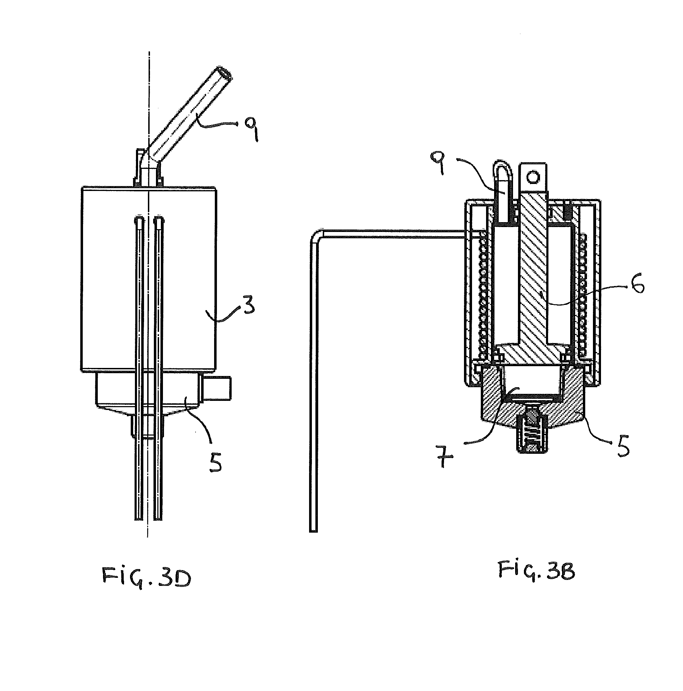

The cross-sectional view shown in Figures 3A and 3B illustrates schematically the piston 6 during two operating steps inside the dosing chamber 3; in Figure 3A it is shown during a so-called water filling step, where water is allowed to pass from the storage tank 2 to the chamber 3, and in Figure 3B it is shown during a closing step where, while still allowing the flow of further water from the storage tank to the chamber 3, it prevents further water from flowing towards the pod or capsule 7.

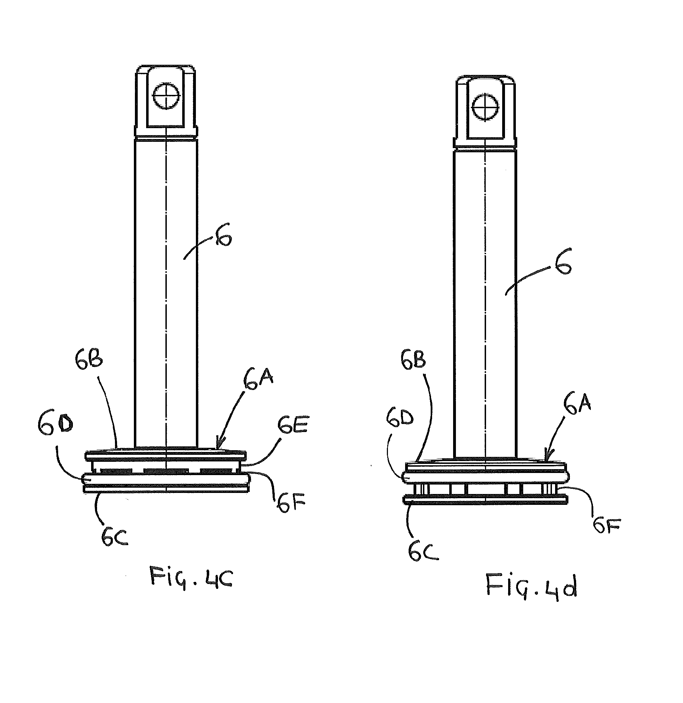

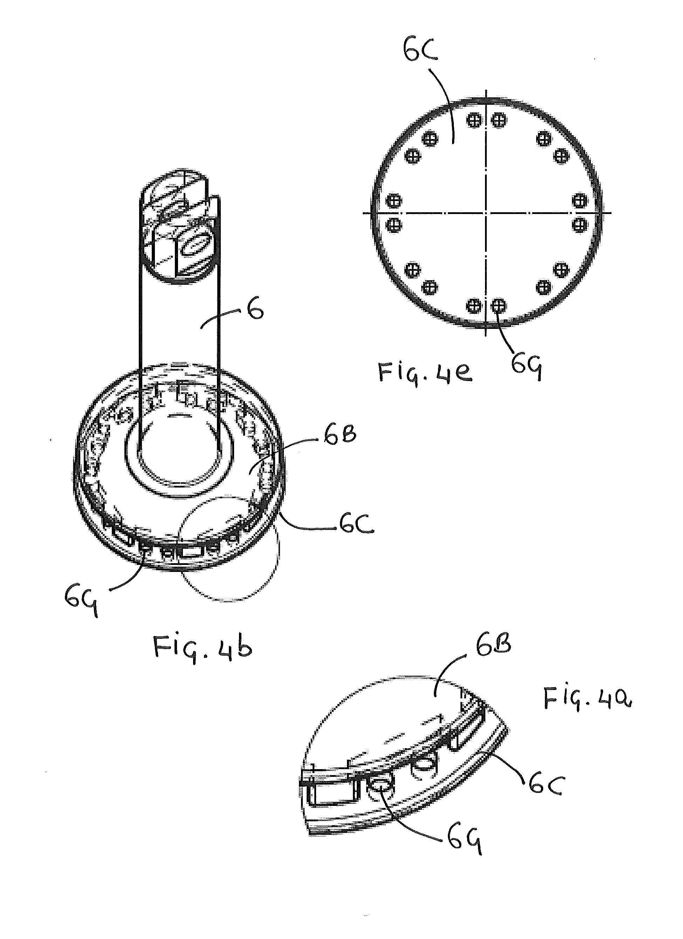

Operation of the piston 6 can be understood from Figures 4A-4D. As can be seen in Figure 4D, the piston 6 has a circular head 6A formed by two discs 6B, 6C which are spaced and have a diameter substantially the same as the diameter of the dosing chamber 3. The head 6A has, between the discs 6B, 6C, two annular constrictions 6E, 6F of different diameter around which a seal 6D with a diameter substantially the same as the diameter of the chamber 3 may be positioned.

The annular portion 6F facing the distal ring 6C has a diameter smaller than the annular portion 6E facing the proximal ring 6B and between it and the dosing chamber 6D the seal 6D does not perform a sealing action, while between the dosing chamber 3 and the annular portion 6E the seal performs a sealing action.

The distal disc 6C, i.e. the disc facing the pod or the capsule 7 in the operating condition, has defined therein openings 6G, for example holes, which allow water to pass from the storage tank 2 to the chamber 3 during the filling step shown in Figure 3A. During this step, and in particular when the piston 6 is at the end of its stroke, towards the storage tank 2, the seal 6D is positioned in contact with the distal disc 6C around the annular portion 6E, owing to a previous displacement of the piston inside the chamber 3, during which the seal 6D is brought into contact with the distal disc 6C owing to the effect of the friction with the internal walls of the chamber. In this position, the seal does not interfere with the passage of water into the chamber 3 and through the holes.

With the displacement of the piston towards the pod or capsule, the seal 6D comes into contact with the proximal disc 6B and is positioned in a sealed manner on the annular portion 6E, preventing further water from passing towards the pod or the capsule 7 or the water already present inside the chamber 3, between the piston and the pod or the capsule, from being able to flow into the top part of the chamber 3. When it is displaced inside the chamber towards the pod or capsule, the piston exerts a pressure on the heated water which is compressed inside the pod or capsule holder containing the pod or capsule.

In the closed position shown in Figure 3B, the piston 6 is ready to be raised towards the top part of the dosing chamber, which in the meantime has already been filled with water from the storage tank 2, for example has flowed down by means of gravity from the top as the piston 6 creates space inside the chamber 3, being lowered towards the pod holder and the pod 7 (or towards the capsule holder and the respective capsule). When the piston 6 is raised again, the seal 6D, again owing to the effect of the friction with the internal walls of the dosing chamber 3, comes back into contact with the distal disc 6C, around the annular portion 6F, and allows water to pass into the bottom part of the chamber, i.e. between the piston 6 and the pod 7 or the capsule 7.

In other words, the piston 6 is operative inside the dosing chamber 3 and the seal 6D is movable on the head 6A of the piston 6 between the proximal annular portion 6E against which it performs a sealing action, preventing fluid from passing between the chamber 3 and the piston 6, and the distal annular portion 6F, around which it allows fluid to pass between the chamber 3 and the piston 6, the seal 6D passing from the proximal annular portion to the distal annular portion or vice versa, respectively, by displacing the piston 6 towards the pod 7 or towards the capsule 7, in order to dispense the hot water from the chamber 3, or by moving the piston away from the pod 7 or from the capsule 7, in order to fill water between the pod 7 or the capsule and the piston 6.

According to this feature of the invention, the quantity of water to be dispensed towards the pod or the capsule may be manually adjusted by the user and substantially corresponds to the distance between the piston 6 and the pod 7 or the capsule 7. For example, by moving the piston 6 half-way along the height of the dosing chamber and then lowering the piston towards the pod or the capsule, it is possible to dispense a dose of coffee corresponding to half the capacity of the chamber; by raising or lowering the piston beyond the half-way point of the chamber it is possible to increase or reduce the dose of coffee to be dispensed.

Therefore, the dose of hot water to be dispensed towards the pod or the capsule corresponds to a height of the piston 6 inside the dosing chamber: the further the piston is moved away from the pod or the capsule, the greater the amount of water which flows between the piston and the base of the dosing chamber and therefore the greater the quantity of water dispensed during compression (closing) of the piston.

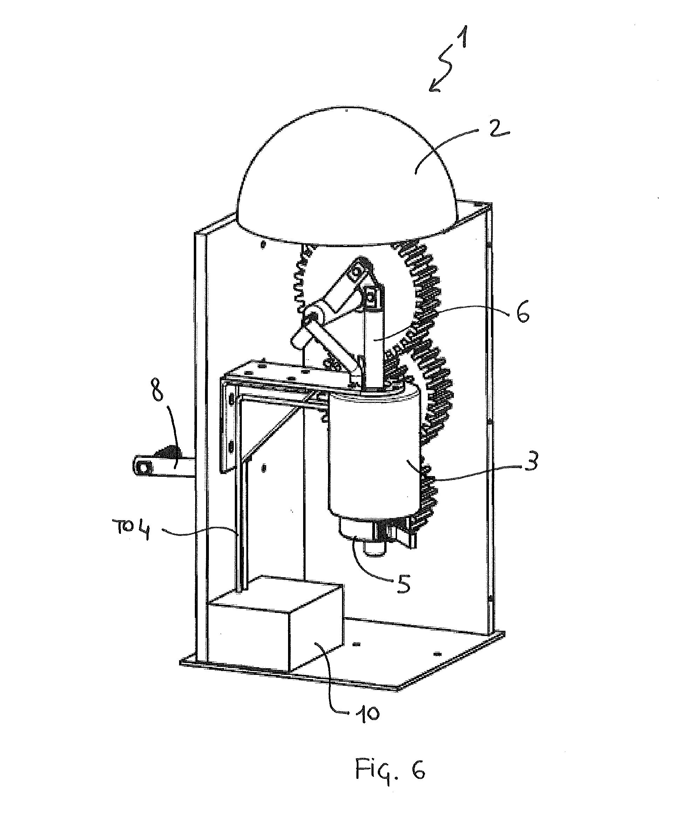

The height of the piston inside the chamber is preferably adjusted by means of a manual lever 8 operating the piston 6. Figure 6 schematically illustrates a pod or capsule coffee machine in which the lever 8 is associated with the piston 6 by means of a gear system which acts as a force multiplier: rotation of the lever 8 in one direction moves the head 6A of the piston away from the pod (or capsule) and in the other direction moves it closer thereto.

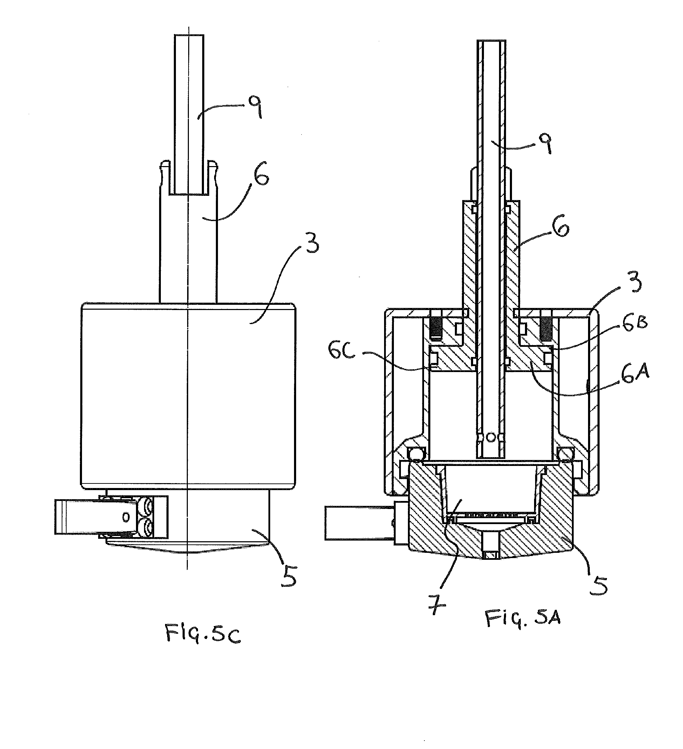

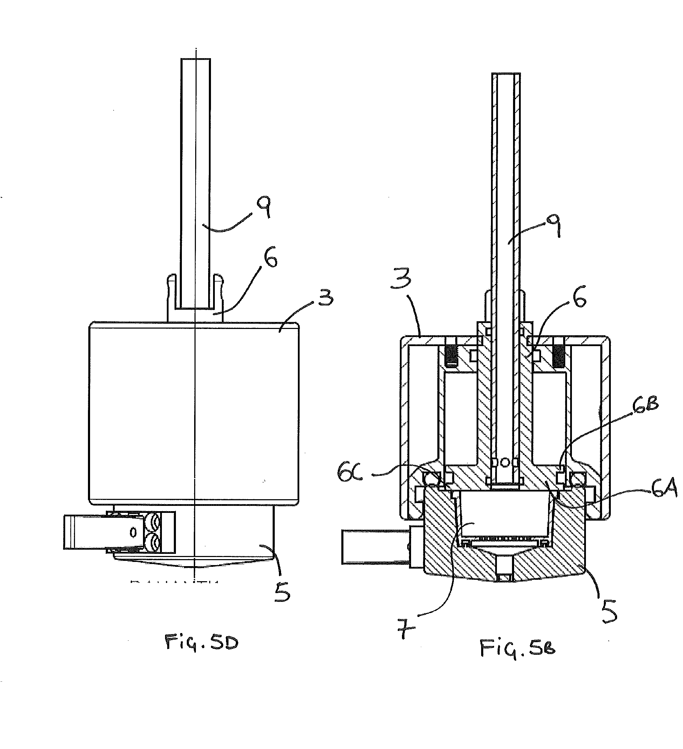

According to a different of embodiment of the present invention, the duct 9 for passage of the water between the storage tank 2 and the dosing chamber 3 is situated inside the piston, for example as shown in Figure 5A, preferably inside a stem 6G of the piston having one end on the head 6A and an opposite end connected to the lever 8 or to the piston actuating means. The duct terminates in the head of the piston which therefore has a hole formed therein. In this variant also, the amount of hot water to be dispensed towards the pod 7 (or towards the capsule 7) corresponds to the height of the piston 6 inside the dosing chamber 3.

According to an aspect of the invention, the duct 9 also acts as an electromagnet field inducer element superheating the stem 6G of the piston so as to transfer heat to the water inside the dosing chamber 3. In this case, the heat is transferred from the inside towards the outside of the dosing chamber. Other methods for transferring the heat by means of electromagnetic induction nevertheless fall within the scope of protection of the invention.

The manual adjustment of the amount of water by means of the lever 8 and the piston 6 is advantageous because it allows the machine to be simplified and costs to be reduced. In particular, complications involving the circuit board and the electric valves are avoided. Obviously it also possible for this height to be adjusted electronically, for example by means of a gear system controlled by the circuit board 10.

For example, the amount of water transferred from the storage tank 2 to the chamber 3 may be controlled by a flowmeter and a circuit board 10 connected thereto. The circuit board 10 stores a plurality of programs, each corresponding to a type of coffee to be dispensed - for example espresso coffee, long coffee or American coffee - and a quantity of water to be conveyed and heated inside the dosing chamber 3. The program can be selected by the user and the circuit board 10 intercepts the flow of water from the storage tank 2 to the chamber 3, for example by means of an electric valve, after transfer of a predetermined amount of water to the chamber, which depends on the selected program.

According to another embodiment of the invention, the dosing chamber 3 is filled completely and transfer of water from the storage tank 2 terminates because the chamber 3 is full; in this case, the amount of heated water corresponds to the capacity of the chamber 3. According to a feature of this embodiment, means are provided for controlling the quantity of heated water to be dispensed inside the chamber 3 towards the pod 7 or the capsule. In this case also, savings in energy are ensured and the quality of the coffee is optimum because the amount of water inside the chamber 3 is in any case very limited, but the flowmeter and the circuit board 10 control the flow from the dosing chamber 3 to the pod 7 (or the capsule 7) and not from the storage tank 2 to the chamber 3, as in the embodiment previously described.

According to the present invention, the abovementioned technical problem is also solved by a method for preparing the coffee in a coffee machine of the type described above. In particular, the method envisages using a machine 1 comprising a water storage tank 2, electromagnetic induction heating means, for heating the water, and a capsule holder.

According to the invention, the method comprises the steps of inserting a capsule in the capsule holder, transferring an amount of water to be dispensed from the storage tank 2, operating the electromagnetic induction heating means 4, so as to heat the amount of water, and extracting the coffee by dispensing the heated water through the pod or capsule.

Preferably, the water flows from the storage tank 2 to a dosing chamber 3. Even more preferably, the water flows to the chamber by means of gravitational force. According to another preferred feature of the method, the water in the dosing chamber 3 is heated instantaneously by means of electromagnetic induction.

The amount of heated water used to extract the coffee is adjusted by displacing a piston 6 inside the chamber 3, manually or electrically, the amount being increased, by displacing the piston upwards inside the chamber 3, and being compressed inside the pod holder and inside the respective pod, by displacing the piston downwards, inside the chamber 3.

## Claims

1. Coffee machine (1) comprising a water storage tank (2), water heating means (4) and a capsule holder (5) suitable for receiving a pod or capsule from which coffee is extracted using the heated water, **characterized in that** said heating means (4) are of the electromagnetic induction type.

2. Coffee machine according to Claim 1, **characterized in that** it comprises a dosing chamber (3) suitable for receiving a given amount of water from the storage tank (3) and **in that** said heating means are associated with the dosing chamber (3) in order to heat the amount of the water (3) inside the chamber (3).

3. Coffee machine according to Claim 1, **characterized in that** the dosing chamber (3) is situated downstream of the storage tank (2), in order to receive the amount of water by means of gravitational force.

4. Coffee machine according to Claim 2, **characterized in that** it comprises a piston (6) operating inside the chamber (3) and suitable for regulating the amount of water to be used for extracting the coffee or compressing the heated water inside the pod.

5. Coffee machine according to Claim 4, **characterized in that** said electromagnetic induction heating means (4) are incorporated in the piston (6).

6. Coffee machine according to Claim 2, **characterized in that** said electromagnetic induction heating means (4) are arranged around the distribution chamber (3).

7. Coffee machine according to Claim 4, **characterized in that** the amount of heated water to be compressed towards the pod corresponds to a height of the piston (6) inside the dosing chamber (3).

8. Coffee machine according to Claim 5, **characterized in that** said height is set manually, preferably by means of a lever (8) operating the piston (6).

9. Coffee machine according to Claim 4, **characterized in that** it comprises a seal (6D) movable on a head (6A) of the piston (6) between a proximal annular portion (6E), against which it performs a sealing action, preventing fluid from passing between the chamber (3) and the piston (6), and a distal annular portion (6F), around which it allows fluid to pass between the chamber (3) and the piston (6), said seal (6D) passing from the proximal annular portion (6E) to the distal annular portion (6F) or vice versa, respectively, due to the displacement of the piston (6) towards the pod, for dispensing the hot water from the chamber, or movement of the piston away from the pod, to fill water between the pod (7) and the piston (6).

10. Coffee machine according to Claim 2, **characterized in that** it comprises control means for measuring the amount of water to be transferred from the storage tank (2) to the dosing chamber, to extract coffee with a predefined concentration.

11. Coffee machine according to Claim 1, **characterized in that** it comprises a pump for transferring water from the storage tank (2).

12. Method for preparing coffee in a coffee machine (1) comprising a water storage tank (2), electromagnetic induction means for heating the water and a capsule holder, the method comprising the steps of inserting a capsule in the capsule holder, activating the water heating means (4), in order to heat the water, and extracting the coffee by dispensing the heated water through the pod or capsule.

13. Method according to Claim 12, **characterized in that** the water flows from the storage tank (2) to a water dosing chamber (3) and **in that** the electromagnetic induction heating means heat the water inside said dosing chamber (3).

14. Method according to Claim 13, **characterized in that** the water flows from the storage tank (2) to the chamber by means of gravitational force.

15. Method according to Claim 13, **characterized in that** an amount of heated water used to extract the coffee is adjusted by displacing a piston (6) inside the chamber (3), manually or electrically, said amount being preferably increased, by displacing the piston upwards inside the chamber (3), and being compressed inside the pod holder and inside the respective pod, by displacing the piston downwards, inside the chamber (3).
